# EUROPÄISCHE PATENTANMELDUNG

(11) **EP 4 474 788 A1**
(43) Veröffentlichungstag der Anmeldung: **11.12.2024**
(21) Anmeldenummer: 24178180.6
(22) Anmeldetag: 27.05.2024
(51) Int. Cl.: G01L 19/04, G01L 23/28

(54) **ADAPTER FÜR EINEN SENSOR UND SENSOR MIT SENSORADAPTER**

(30) Priorität: 07.06.2023 EP 23178045
(71) Anmelder: Kistler Holding AG, 8408 Winterthur (CH)
(72) Erfinder: Tester, Michael, 8006 Zürich (CH); Hess, Reinhold, 8405 Winterthur (CH); Hertz, Cyril Brian, 9427 Wolfhalden (CH)

(57) **Zusammenfassung**

Die Erfindung betrifft einen Adapter zur Kühlung oder Heizung oder Temperierung eines Drucksensors, wobei der Adapter mindestens eine Zuleitung aufweist, wobei der Adapter mindestens eine Ableitung aufweist, wobei der Adapter mindestens einen Hohlraum aufweist, wobei die mindestens eine Zuleitung und die mindestens eine Ableitung mit dem mindestens einen Hohlraum derart verbunden sind, dass ein fluides Temperiermedium von der Zuleitung durch den Hohlraum zu der Ableitung zirkulierbar ist, wobei der Adapter eine entlang einer Längsachse ausgeführte Ausnehmung zur Aufnahme eines Drucksensors aufweist, wobei die Ausnehmung ein erstes Ende aufweist, welches bei Verwendung einem Messmedium zugewandt ist, und wobei die Ausnehmung ein zweites Ende aufweist, in welches zweite Ende ein Drucksensor einfügbar ist, und wobei der Hohlraum derart ausgeführt ist, dass die Ausnehmung vom Temperiermedium umströmbar ist, wobei der Adapter einstückig ausgeführt ist. Die Erfindung betrifft auch einen temperierten Sensor aufweisend einen Adapter und einen Sensor.

## Beschreibung

### Technisches Gebiet

Die Erfindung betrifft einen Adapter zur Kühlung oder Heizung oder Temperierung eines Sensors.

### Stand der Technik

Sensoren erfassen in verschiedenen Bereichen der Technik, beispielsweise in der Industrie oder der naturwissenschaftlichen Forschung, physikalische Eigenschaften eines fluiden Mediums. Physikalische Eigenschaften eines fluiden Mediums sind beispielsweise Druck, Temperatur, pH-Wert, Viskosität, Kompressibilität oder Strömungsgeschwindigkeit. Viele dieser Eigenschaften sind temperaturabhängig.

Eine wichtige Eigenschaft, auf die sich die Erfindung jedoch keineswegs beschränkt, ist der Druck eines fluiden Mediums. Das fluide Medium, dessen Eigenschaft ermittelt wird ist im Folgenden als Messmedium bezeichnet.

Ein Messmedium ist ein fluides Medium im gasförmigen oder im flüssigen Aggregatszustand oder eine Mischung aus gasförmigem und flüssigem Aggregatszustand. Ein Messmedium kann beispielsweise ein Gas oder eine Flüssigkeit sein. Ein fluides Medium ist beispielsweise auch ein Kraftstoff-Gas Gemisch im Brennraum einer Brennkraftmaschine oder, nach zumindest teilweiser Verbrennung des Kraftstoffs, das entstandene Abgas. Ein Messmedium kann auch ein Arbeitsmedium in einem Kompressor, beispielsweise einer Wärmepumpe oder in einem Kühlkompressor sein. Ein Messmedium kann auch ein Gas sein, beispielsweise Edelgase oder auch Wasserstoff.

In vielen Fällen weist ein Messmedium eine hohe Temperatur oberhalb von 200°C auf, oder eine niedrige Temperatur unterhalb 0°C.

Ein Messmedium kann zusätzlich auch korrosive Eigenschaften haben.

Sensoren zur Ermittlung mindestens einer physikalischen Eigenschaft eines Messmediums sind jedoch empfindlich gegenüber einer zu hohen oder zu niedrigen Temperatur. So kann eine zu hohe oder zu niedrige Temperatur das Messergebnis verfälschen durch eine Temperaturabhängigkeit eines Messelements des Sensors. So kann insbesondere bei einer Temperaturänderung des Messmediums eine physikalische Eigenschaft möglicherweise nicht mit hoher Genauigkeit ermittelt werden. Zu hohe Temperaturen können jedoch auch den Sensor beschädigen. So treten beispielsweise in einigen piezoelektrischen Materialien, wie sie als Messelemente in Drucksensoren eingesetzt werden, bei Temperaturen oberhalb 300°C irreversible Veränderungen auf. Andererseits können bei zu niedrigen Temperaturen im Sensor verwendete Werkstoffe verspröden. Dies kann zu Rissbildung und einer Zerstörung des Sensors führen.

In CH700534A1 ist ein Sensor offenbart, welcher von einem Gehäuse zur Kühlung des Sensors umgeben ist. Das Gehäuse weist einen Adapter zur Kühlung eines Drucksensors auf. Der Adapter hat eine Zuleitung sowie eine Ableitung; welche jeweils mit einem Hohlraum verbunden sind. Ein fluides Kühlmedium zirkuliert von der Zuleitung durch den Hohlraum zu der Ableitung. Der Adapter weist eine entlang einer Längsachse ausgeführte Ausnehmung zur Aufnahme des Drucksensors auf. Der Hohlraum umgibt die Ausnehmung radial.

Bekannte Adapter haben den Nachteil, dass sie wesentlich zur Baugrösse eines mittels Adapters temperierten Sensors beitragen. Die Zusammenstellung Adapter mit Sensor, im Folgenden Temperierzusammenstellung genannt, benötigt eine grössere Messbohrung als ein einzelner Sensor.

In vielen Anwendungen sind die Platzverhältnisse um Bohrungen für die Druckmessung beengt. Auch ist der Durchmesser der Bohrung selbst oftmals begrenzt. Konventionell durch zerspanende Fertigungsmethoden hergestellte Adapter aus Dreh- und Frästeilen weisen einen relativ grossen Bauraum auf. So müssen für Verbindungen zwischen Teilen relativ grosse, stabile Elemente vorgehalten werden. Auch mit konventionellen Fertigungsmethoden sind Elemente zur Stabilitätserhöhung nicht einfach beliebig im Adapter platzierbar. Dies führt zu relativ grossen Adaptern.

Ein Adapter weist im Allgemeinen eine Temperierleistung auf, welche von dem Druckverlust zwischen Zulauf und Ablauf und der dadurch beschränkten druckabhängigen Durchflussgeschwindigkeit abhängt. Je effektiver der Wärmeenergieübertrag zwischen Temperiermedium und Adapter, desto besser die Temperierleistung. Der Druckverlust hängt wiederum wesentliche von der Geometrie des Hohlraums und Querschnitt von Zulauf und Ablauf ab. Eine optimale Kühl-/Heizleistung pro verfügbarem Bauraum ist bisher schwierig zu realisieren.

Aufgabe der Erfindung ist es einen Sensor mittels eines Adapters vor hoher oder niedriger Temperatur zu schützen und den Adapter dahingehend zu verbessern, dass die oben erwähnten Nachteile verringert werden. Eine weitere Aufgabe ist eine möglichst ökonomische Fertigung eines Adapters.

### Darstellung der Erfindung

Die Aufgabe wird durch die Merkmale der unabhängigen Ansprüche gelöst.

Die Erfindung betrifft einen Adapter zur Kühlung oder Heizung oder Temperierung eines Drucksensors. Unter dem Begriff Kühlung wird ein Vorgang verstanden, bei dem thermische Energie, auch als Wärmeenergie oder Wärme bezeichnet, aus dem Adapter bzw. von einem im Adapter angeordneten Sensor abgeführt wird. Dem Sensor wird somit Wärme entzogen. Unter dem Begriff Heizung wird ein Vorgang verstanden, bei dem thermische Energie dem Adapter bzw. einem im Adapter angeordneten Sensor zugeführt wird. Unter dem Begriff Temperierung wird ein Vorgang verstanden, bei dem die Temperatur eines Adapters bzw. eines im Adapter angeordneten Sensors konstant gehalten werden soll. Dem Adapter wird, je nach Temperatur, Wärme entzogen oder zugefügt.

Im Folgenden wird der Einfachheit halber der Begriff Temperierung bzw. Temperieren verwendet. Damit sind jedoch jeweils auch eine Kühlung oder eine Heizung gemeint.

Der Adapter weist mindestens eine Zuleitung auf. Der Adapter weist mindestens eine Ableitung auf. Die Zuleitung und die Ableitung sind Leitungen zum Leiten eines fluiden Temperiermediums, kurz Temperiermedium. Zuleitung und Ableitung sind eingerichtet, an eine Einrichtung, beispielsweise an einem Kühlgerät, einem Heizgerät oder einem Temperiergerät angeschlossen zu werden. Das Temperiermedium kann von der Einrichtung durch die Zuleitung geleitet werden und von der Ableitung zurück zur Einrichtung. Der Adapter weist zudem mindestens einen Hohlraum auf. Die mindestens eine Zuleitung und die mindestens eine Ableitung sind dem mindestens einem Hohlraum derart verbunden, dass das fluide Temperiermedium von der Zuleitung durch den Hohlraum zu der Ableitung zirkulierbar ist.

Der Adapter ist bei Verwendung in eine Bohrung einer Apparatur eingebracht, eine sogenannte Messbohrung. Im inneren der Apparatur befindet sich das Messmedium.

Der Adapter weist eine entlang einer Längsachse ausgeführte Ausnehmung zur Aufnahme eines Sensors auf. Die Ausnehmung weist ein erstes Ende auf. Das erste Ende der Ausnehmung ist bei Verwendung des Adapters einem Messmedium zugewandt. Die Ausnehmung weist auch ein zweites Ende auf. Das zweite Ende ist üblicherweise einem Raum mit normalem Druck zugewandt. Üblicherweise ist der Sensor, beispielsweise ein Drucksensor, durch das zweite Ende in den Adapter einfügbar. In der Ausnehmung des Adapters ist der Sensor derart angeordnet, dass Adapter und Sensor wärmeleitend verbunden sind. Der Adapter ist somit zwischen der Messbohrung und dem Sensor angeordnet.

Unter einem fluiden Temperiermedium wird eine Flüssigkeit oder ein Gas oder eine Gas-Flüssigkeitsmischung verstanden. Ein fluides Temperiermedium enthält beispielsweise ein Öl, flüssiges Natrium, Wasser, Flüssigkeiten mit Anteilen von Glycerin oder Ethylenglycol oder Ethanol oder Propylenglykol oder einem anderen Kühlmittel, Stickstoff, Luft, Edelgase, und andere geeignete Kühlflüssigkeiten. Das Temperiermedium kann von der Einrichtung auf eine Solltemperatur gebracht werden. Alternativ kann die Einrichtung das Temperiermedium auch eine bestimmte Menge thermische Energie entziehen oder zufügen.

Ein Adapter wird beispielsweise als Kühladapter in oben bereits genannter CH700534A1 verwendet. In genannter Offenbarung wird der Druck eines heissen Messmediums, genauer Auslass-, Brennraum-, Brennkammer- und Turbinendrücke, bestimmt. Der Adapter ist eingerichtet an eine Kühleinrichtung angeschlossen zu werden. Als Temperiermedium wird Wasser verwendet.

Als Heizadapter sind Adapter bekannt, welche beispielsweise Drücke in Kältemaschinen, genauer im Kompressor einer Kältemaschine erfassen. Im Hohlraum des Adapters zirkuliert ein Temperiermedium. Das Temperiermedium soll den Adapter und den in der Ausnehmung des Adapters angeordneten Sensor auf eine höhere Temperatur als das kalte Messmedium bringen. Der Sensor ist daher wärmeleitend mit dem Adapter verbunden.

Der Hohlraum des Adapters ist derart ausgeführt, dass die Ausnehmung vom Temperiermedium umströmbar ist. Unter umströmbar wird verstanden, dass der Hohlraum, projiziert auf eine Ebene senkrecht zur Längsachse, die Längsachse zu 360° umschliesst. Der Hohlraum kann sich beispielsweise als zwei gegeneinander versetzte schraubenförmige Röhren um die Längsachse erstrecken, welche am ersten Ende des Adapters miteinander verbunden sind. Der Hohlraum muss daher nicht notwendigerweise in einer Ebene senkrecht zur Längsachse die Ausnehmung vollständig umgeben.

Erfindungsgemäss ist der Adapter einstückig ausgeführt. Unter einstückig wird verstanden, dass der Adapter aus einem Werkstoff ausgeführt ist. Der einstückige Adapter ist daher nicht aus mehreren Halbzeugen oder mehreren Werkstücken zusammengefügt. Dies hat den Vorteil, dass eine Justierung verschiedener Werkstücke zueinander bei der Fertigung eines Adapters entfällt. So wird Ausschuss durch mangelhafte Justierung vermieden.

Vorteilhaft ist der Adapter schweissfrei und lötfrei ausgeführt.

Unter schweissfrei wird verstanden, dass der Adapter keine Schweissnähte aufweist, die den Adapter verschliessen. So werden beispielsweise Rohre oft aus einem gebogenen rechteckigen Blechstück gefertigt, dessen eine Seite mit der gegenüberliegenden Seite zusammengebogen und mit einer Schweissnaht versehen sind. Der einstückige Adapter enthält keine solche Schweissnähte. Dies ist vorteilhaft, da Schweissnähte anfällig gegenüber Korrosion sind und zur Materialermüdung beitragen können, beispielsweise durch die sogenannte Wasserstoffversprödung. Schweissnähte und Schweissungen sind auch nachteilig, da an ihnen durch den Schweissprozess von zwei massiven Flächen oft mechanische Spannungen vorliegen, insbesondere bei Temperaturänderungen des umliegenden Materials. Bei mechanischer und/oder thermischer Beanspruchung kann es zu einer Rissbildung und schlussendlich zum Ausfall eines geschweissten Adapters führen. Gleiches gilt, mutandis mutatis, für Lötverbindungen. Der schweissfreie und lötfreie Adapter ist daher widerstandfähiger als ein Adapter mit Schweissverbindungen.

Vorteilhaft ist der Adapter mit einem additiven Fertigungsverfahren hergestellt. Ein additives Fertigungsverfahren zeichnet sich dadurch aus, dass das zu fertigende Bauteil schichtweise durch Zugabe von mindestens einem Werkstoff gefertigt wird. Das zu fertigende Bauteil ist in diesem Zusammenhang der Adapter. Bei additiven Fertigungsverfahren, auch als 3D-Drucktechnik oder 3D-Druck bezeichnet, wird der Werkstoff, üblicherweise Schicht für Schicht, zusammengefügt, um ein Bauteil Werkstücke aus 3D-Modelldaten zu erzeugen. Bei einigen additiven Fertigungsverfahren werden die zu produzierenden Bauteile direkt in allen drei Raumrichtungen hergestellt. Meistens erfolgt die Herstellung jedoch schichtweise, wobei zunächst eine Schicht des Bauteils in hauptsächlich zwei Raumrichtungen hergestellt wird. Durch Hinzufügen weiterer Schichten in der dritten Raumrichtung kann das Teil dreidimensional hergestellt werden.

Additive Fertigungsverfahren, auch synonym oftmals als generative Fertigungsverfahren bezeichnet, sind beschrieben in Norm DIN EN ISO 52900:2022-03 sowie in Kapitel 3 der Publikation: acatech - Deutsche Akademie der Technikwissenschaften, Nationale Akademie der Wissenschaften Leopoldina, Union der deutschen Akademien der Wissenschaften (Hrsg.) (2016): «Additive Fertigung», München, ISBN: 978-3-8047-3676-4 (Englische Fassung unter: acatech - National Academy of Science and Engineering, German National Academy of Sciences Leopoldina, Union of the German Academies of Sciences and Humanities (Editors) (2017): «Additive Manufacturing», Munich, ISBN: 978-3-8047-3677-1).

Bekannte additive Fertigungsverfahren beinhalten das Strangablegeverfahren (FDM), auch als Fused Deposition Modelling (FDM) oder Fused Layer Manufacturing/Modelling (FLM) bekannt, den Binder-Druck (3DP), das Schichtlaminieren (LOM, Laminated Object Modelling), auch als Layer Laminated Manufacturing (LLM) oder Sheet Lamination bezeichnet, die Stereolithografie (SLA,STL), den Harz-Druck (PJM), das Kunststoff-Laser-Sintern (SLS, Selective Laser Sintering), auch als Polymer-Laserstrahlschmelzen bekannt.

Insbesondere für metallische Werkstoffe geeignet sind pulverbettbasierte additive Fertigungsverfahren. Hierbei wird der Werkstoff als Pulverschicht aufgetragen und anschliessend selektiv unter Wärmezuführung aufgeschmolzen. Nach anschliessendem Erstarren wird überschüssiger, nicht aufgeschmolzener Werkstoff entfernt. Beispiele für pulverbettbasierte additive Fertigungsverfahren für metallische Werkstoffe sind das Laserstrahlschmelzen (SLM, (Selective Laser Melting) oder Direct Metal Laser Sintering (DMLS) oder LaserCUSING oder Laser Metal Fusion (LMF) oder Direct Metal Printing (DMP) oder Laser Beam Melting (LBM) oder Direct Metal Laser Melting bekannt. Alternativ zur Wärmeeinbringung durch einen Laser ist auch das Elektronenstrahlschmelzen (EBM, Electron Beam Melting) bekannt.

Auch bekannt und geeignet für metallische Werkstoffe sind additive Fertigungsverfahren, bei denen ein pulverförmiger Werkstoff selektiv als Gasstrom an eine bestimmte Position geführt und aufgeschmolzen wird, wie beispielsweise das Additive Auftragschweissen (LMD, Laser Metal Deposition) oder Direct Metal Deposition (DMD) oder Laser Engineered Net Shaping (LENS) oder Elektronenstrahlbasierte Additive Fertigung (EBAM).

Insbesondere für Graphit eignet sich das bekannte Siebdruckverfahren, welches ebenfalls ein additives Fertigungsverfahren darstellt. So können Grünlinge aus Graphit oder einem keramischen Werkstoff zunächst additiv gefertigt und anschliessend gesintert werden.

Aufgrund der raschen Entwicklungszeit im Bereich additiver Fertigungsverfahren sind jedoch auch andere additive Fertigungsverfahren denkbar.

Der durch additive Fertigungsverfahren ausgeführte Adapter ist insbesondere vorteilhaft gegenüber konventionell durch zerspanende Fertigungsmethoden hergestellte Adapter, da der Hohlraum frei von einer Beschränkung durch Fertigungsmethoden geformt sein kann. So kann der Hohlraum eine komplexe Geometrie aufweisen. Es können beispielsweise Elemente zur Stabilitätserhöhung, wie Stäbe oder Brücken zwischen den Wänden des Hohlraums, ohne weiteres an geeigneten Positionen platzierbar sind. Dadurch kann die Wandung des Adapters dünner ausgeführt werden. So kann der Hohlraum vergrössert werden. Alternativ kann, bei gleichem Hohlraumvolumen, der Adapter kleiner ausgeführt sein als ein konventionell gefertigter Adapter. Die Kühlleistung/Heizleistung des Adapters skaliert dabei exponentiell mit der Wandstärke zwischen Hohlraum und Ausnehmung für den Sensor.

Anstelle der oval oder runden Form des Hohlraums eines konventionellen Adapters, wie in CH700534A1 offenbart, kann der Hohlraum komplex gestaltet und auf eine optimierte Kühlung/Heizung ausgelegt werden. So können in einstückigen konventionellen Bauelementen nur Hohlräume mit geraden Kühlkanälen, also geraden Bohrungen, realisiert werden. Der durch additive Fertigungsverfahren ausgeführte Adapter kann beispielsweise einen oder auch mehrere schraubenförmige oder geschwungene Kühlkanäle als Hohlraum aufweisen. Auch können sich Kanäle einfach in mehrere Teilkanäle aufspalten oder mehrere Teilkanäle zu einem Kanal vereinigen. Es kann selbstverständlich auch eine ovale oder runde Form des Hohlraums ausgeführt werden.

Im Falle eines Drucksensors kann der Sensor aufgrund des kleineren Bauraums des Adapters weiter vorne platziert werden. Dies führt zu einer besseren Kühlleistung des durch additive Fertigungsverfahren ausgeführten Adapter. Zusätzlich kann der Zuführkanal zum Zuführen des Messmediums zum Drucksensor, dem sogenannten Druckanschluss, kürzer ausgeführt sein, was sich positiv auf die Grenzfrequenz der im Zuführkanal üblicherweise auftretende Pfeifenschwingungen auswirkt. Pfeifenschwingungen sind durch die bekannte Theorie des Helmholtz-Resonators beschrieben und stören das Messsignal, insbesondere wenn schnelle Druckänderungen ermittelt werden sollen.

Der durch additive Fertigungsverfahren aus einem Stück ausgeführte Adapter zeichnet sich durch tiefere Herstellkosten aus, da diverse Arbeitsschritte, wie Justieren vor der Montage, Montieren und Schweissen, gegenüber einem konventionellen Adapter entfallen.

Zudem fällt bei konventionell zerspanend gefertigten Adaptern Werkstoff als Abfallprodukt an. Dieser Abfall wird bei durch additive Fertigungsverfahren aus einem metallischen Werkstoff ausgeführten Adaptern vorteilhafterweise vermieden. Der pulverförmige metallische Werkstoff wird selektiv aufgeschmolzen bzw. aufgetragen. Überschüssiger pulverförmiger metallischer Werkstoff kann entfernt, aufgefangen und wieder verwendet werden. Dies führt zu geringeren Herstellungskosten.

Weitere Vorteile und Aspekte der Erfindung sind in den Ausführungsbeispielen offenbart.

### Kurze Beschreibung der Zeichnungen

Im Folgenden wird die Erfindung beispielhaft unter Beizug der Figuren näher erklärt. Es zeigen
- Fig. 1: zeigt eine schematische Ansicht einer Ausführungsform eines Adapters mit darin angeordnetem Sensor,
- Fig. 2: zeigt einen Ausschnitt einer schematischen Schnittansicht des Adapters mit darin angeordnetem Sensor in der Ausführungsform nach Fig. 1,
- Fig. 3: zeigt einen weiteren Ausschnitt einer schematischen Schnittansicht des Adapters mit darin angeordnetem Sensor in der Ausführungsform nach Fig. 1,
- Fig. 4: zeigt eine schematische perspektivische Ansicht des Adapters in der Ausführungsform nach Fig. 1, wobei Ausnehmung, Fasen, Rohrstücke und Aussensechskant der Übersichtlichkeit halber nicht dargestellt sind,
- Fig. 5: zeigt eine weitere schematische perspektivische Ansicht des Adapters in der Ausführungsform nach Fig. 1, wobei Ausnehmung, Fasen, Rohrstücke und Aussensechskant der Übersichtlichkeit halber nicht dargestellt sind,
- Fig. 6: zeigt eine schematische Ansicht einer weiteren Ausführungsform eines Adapters mit darin angeordnetem Sensor,
- Fig. 7: zeigt einen Ausschnitt einer schematischen Schnittansicht des Adapters mit darin angeordnetem Sensor in der Ausführungsform nach Fig. 6,
- Fig. 8: zeigt einen weiteren Ausschnitt einer schematischen Schnittansicht des Adapters mit darin angeordnetem Sensor in der Ausführungsform nach Fig. 6,
- Fig. 9: zeigt eine schematische perspektivische Ansicht des Adapters in der Ausführungsform nach Fig. 6, wobei d Ausnehmung, Fasen, Rohrstücke und Aussensechskant der Übersichtlichkeit halber nicht dargestellt sind,
- Fig. 10: zeigt eine weitere schematische perspektivische Ansicht des Adapters in der Ausführungsform nach Fig. 6, wobei Ausnehmung, Fasen, Rohrstücke und Aussensechskant der Übersichtlichkeit halber nicht dargestellt sind,
- Fig. 11: zeigt eine schematische Ansicht einer weiteren Ausführungsform eines Adapters mit darin angeordnetem Sensor,
- Fig. 12: zeigt einen Ausschnitt einer schematischen Schnittansicht des Adapters mit darin angeordnetem Sensor in der Ausführungsform nach Fig. 11,
- Fig. 13: zeigt einen weiteren Ausschnitt einer schematischen Schnittansicht des Adapters mit darin angeordnetem Sensor in der Ausführungsform nach Fig. 11,
- Fig. 14: zeigt eine schematische perspektivische Ansicht des Adapters in der Ausführungsform nach Fig. 11, wobei Ausnehmung, Fasen, Rohrstücke und Aussensechskant der Übersichtlichkeit halber nicht dargestellt sind,
- Fig. 15: zeigt eine weitere schematische perspektivische Ansicht des Adapters in der Ausführungsform nach Fig. 11, wobei Ausnehmung, Fasen, Rohrstücke und Aussensechskant der Übersichtlichkeit halber nicht dargestellt sind,
- Fig. 16: zeigt eine schematische Ansicht einer weiteren Ausführungsform eines Adapters mit darin angeordnetem Sensor,
- Fig. 17: zeigt einen Ausschnitt einer schematischen Schnittansicht des Adapters mit darin angeordnetem Sensor in der Ausführungsform nach Fig. 16,
- Fig. 18: zeigt einen weiteren Ausschnitt einer schematischen Schnittansicht des Adapters mit darin angeordnetem Sensor in der Ausführungsform nach Fig. 16,
- Fig. 19: zeigt eine schematische perspektivische Ansicht des Adapters in der Ausführungsform nach Fig. 16, wobei Ausnehmung, Fasen, Rohrstücke und Aussensechskant der Übersichtlichkeit halber nicht dargestellt sind,
- Fig. 20: zeigt eine weitere schematische perspektivische Ansicht des Adapters in der Ausführungsform nach Fig. 16, wobei Ausnehmung, Fasen, Rohrstücke und Aussensechskant der Übersichtlichkeit halber nicht dargestellt sind,
- Fig. 21: zeigt eine schematische Ansicht einer weiteren Ausführungsform eines Adapters mit darin angeordnetem Sensor,
- Fig. 22: zeigt einen Ausschnitt einer schematischen Schnittansicht des Adapters mit darin angeordnetem Sensor in der Ausführungsform nach Fig. 21,
- Fig. 23: zeigt einen weiteren Ausschnitt einer schematischen Schnittansicht des Adapters mit darin angeordnetem Sensor in der Ausführungsform nach Fig. 21,
- Fig. 24: zeigt einen weiteren Ausschnitt einer schematischen Schnittansicht des Adapters mit darin angeordnetem Sensor in der Ausführungsform nach Fig. 21,
- Fig. 25: zeigt eine weitere schematische perspektivische Ansicht des Adapters in der Ausführungsform nach Fig. 21, wobei Ausnehmung, Fasen, Rohrstücke und Aussensechskant der Übersichtlichkeit halber nicht dargestellt sind,
- Fig. 26: zeigt eine schematische Darstellung einer dreidimensionalen Struktur als dreifach periodische Minimalfläche (TPMS, triply periodic minimal surfaces),
- Fig. 27: zeigt eine Schnittansicht einer schematischen Darstellung der dreidimensionalen Struktur nach Fig. 26,
- Fig. 28: zeigt eine weitere Schnittansicht einer schematischen Darstellung der dreidimensionalen Struktur nach Fig. 26,
- Fig. 29: zeigt eine perspektivische Ansicht einer schematischen Darstellung der dreidimensionalen Struktur nach Fig. 26, und
- Fig. 30: zeigt einen Ausschnitt einer Schnittansicht einer Ausführungsform eines Adapters, wobei im Hohlraum eine dreidimensionale Struktur dargestellt ist.

### Wege zur Ausführung der Erfindung

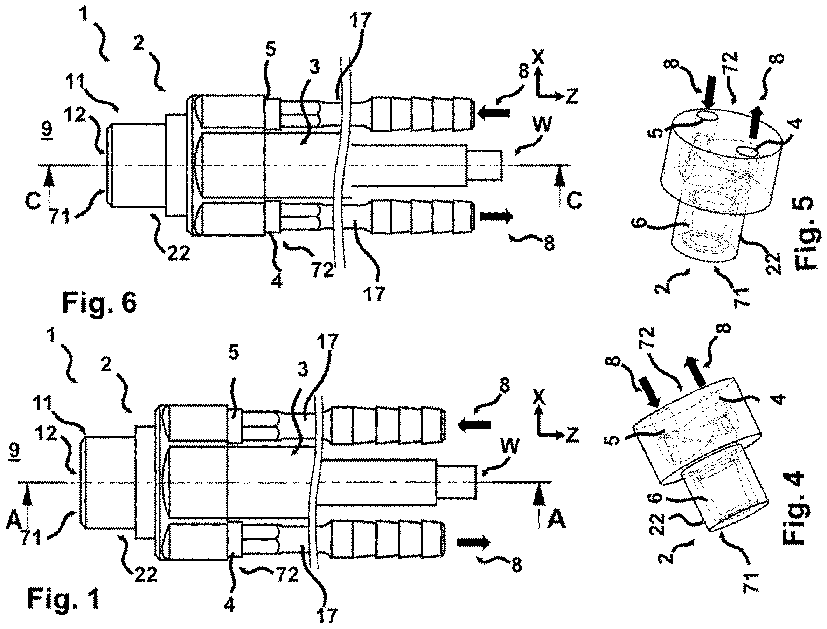

Fig. 1 zeigt eine Ausführungsform eines temperierten Sensors 1. Der temperierte Sensor 1 weist einen Adapter 2 zur Kühlung oder Heizung oder Temperierung eines Drucksensors 3, sowie den Drucksensor 3 auf. Der Adapter 2 weist eine Zuleitung 4 auf. Der Adapter 2 weist eine Ableitung 5 auf. Der Adapter 2 weist zudem einen Hohlraum 6 auf. Die Zuleitung 4 ist mit dem Hohlraum 6 verbunden. Ebenso ist die Ableitung 5 mit dem Hohlraum 6 verbunden. Die Verbindung von Zuleitung 4, Ableitung 5 und Hohlraum 6 ist derart ausgeführt, dass ein fluides Temperiermedium 8 von der Zuleitung 4 durch den Hohlraum 6 zu der Ableitung 5 zirkulierbar ist.

Im gezeigten Ausführungsbeispiel der Fig. 1 sind an Zuleitung 4 und Ableitung 5 jeweils Rohrstücke 17 angefügt, mittels welcher der Adapter 2 mit einer Einrichtung (nicht gezeigt), beispielsweise ein Kühlgerät, ein Heizgerät oder ein Temperiergerät, verbindbar ist.

Der Adapter 2 ist mit einem Drucksensor 3 verbunden. Die Verbindung kann durch Formschluss, Stoffschluss oder Kraftschluss erfolgen. Drucksensor 3 und Adapter 2 sind bevorzugt über Verbindungsmittel 21,31 miteinander verbunden. So weist beispielsweise der Druckanschluss 11 ein Aussengewinde 21 als Verbindungsmittel 21 auf, während der Adapter 2 ein entsprechendes Innengewinde 31 als Verbindungsmittel 31 aufweist. Zwischen Adapter 2 und Drucksensor 3 kann ein Dichtelement 16 angeordnet sein, welches ein Vordringen des Messmediums 9 am ersten Ende 71 des Adapters 2 zum zweiten Ende 72 des Adapters 2 verhindert. Alternativ können Verbindungsmittel 21,31 auch als Bajonettverschluss ausgeführt sein. In einer weiteren Ausführungsform können die Verbindungsmittel 21,31 auch als Schweissverbindung oder Lötverbindung ausgeführt sein. Eine Schweissverbindung hat den Vorteil, dass Dichtelement 16 zwischen Drucksensor 3 und Adapter 2 nicht benötigt ist.

Der Adapter 2 der Fig. 1 weist einen optionalen Druckanschluss 11 auf, welcher bei Verwendung dem Messmedium 9 zugewandt ist. Der Druckanschluss 11 führt das Messmedium 9 dem Drucksensor 3 zu.

Drucksensor 3 und Adapter 2 sind entlang einer Längsachse Z angeordnet. Der Drucksensor 3 erstreckt sich weitgehend entlang der Längsachse Z. Senkrecht zur Längsachse Z erstrecken sich eine erste Querachse X und eine zweite Querachse Y, wobei die erste Querachse X senkrecht zur zweiten Querachse Y ist.

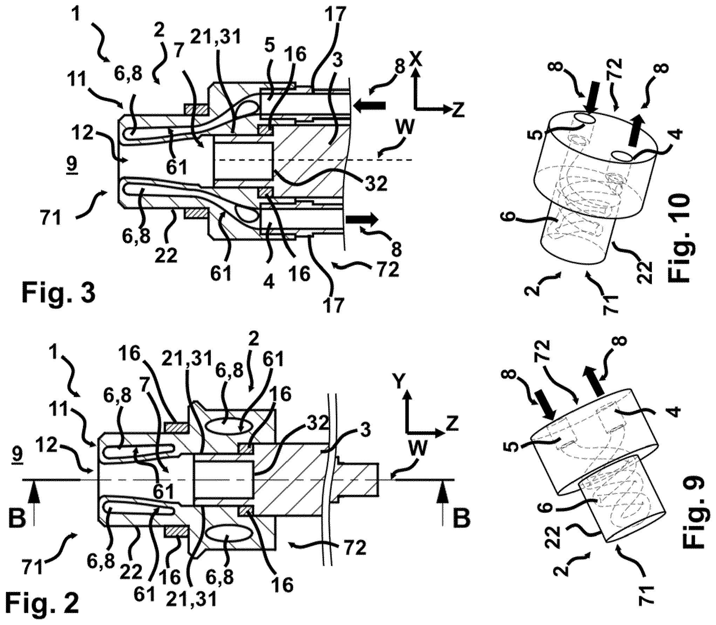

Die Fig. 2 zeigt eine Schnittansicht AA eines Teils der Ausführungsform des gekühlten Sensors 1 mit Adapter 2 und Drucksensor 3 aus der Fig. 1 entlang der Längsachse Z und der zweiten Querachse Y. Der Drucksensor 3 ist in dieser und allen weiteren Schnittansichten der Übersichtlichkeit halber stark vereinfacht mit einer gleichförmigen Schraffur dargestellt.

Der Adapter 2 weist eine entlang der Längsachse Z ausgeführte Ausnehmung 7 zur Aufnahme eines Drucksensors 3 auf. Die Ausnehmung 7 weist ein erstes Ende 71 auf, welches bei Verwendung dem Messmedium 9 zugewandt ist. Die Ausnehmung 7 weist zweites Ende 72 auf. In das zweite Ende 72 kann beispielsweise der Drucksensor 3 eingebracht werden, um in der Ausnehmung 7 angeordnet zu werden.

Der Drucksensor 3 weist im Allgemeinen eine drucksensitive Fläche 32 auf. Die drucksensitive Fläche 32 ist üblicherweise als Membran 32 ausgeführt.

Der Hohlraum 6 ist derart ausgeführt, dass die Ausnehmung 7 vom Temperiermedium 8 umströmbar ist. In der Ausführungsform der Fig. 1 bis 3 ist der Hohlraum 6 als weitgehend rotationssymmetrischer Kanal 6 bezüglich der Längsachse Z mit ovalem Querschnitt in der Nähe des zweiten Endes 72 des Adapters 2 und als weitgehend rotationssymmetrischer Kanal 6 bezüglich der Längsachse Z mit länglichem Querschnitt in der Nähe des ersten Endes 71 des Adapters 2 ausgeführt. Wie in der Schnittansicht BB entlang der Längsachse Z und der ersten Querachse X einer Teilansicht der Ausführungsform des temperierten Sensors 1 aus Fig 1 in Fig. 3 ersichtlich, sind beide Kanäle zu einem Hohlraum 6 verbunden. Ein Teil des Hohlraums 6 in Form des Kanals mit länglichem Querschnitt ist im Druckanschluss 11 des Adapters 2 angeordnet und umschliesst den Zuführkanal 12. Dadurch ist im Zuführkanal 12 befindliches Messmedium 9 temperierbar. Ein weiterer Teil des Hohlraums 6 in Form des Kanals mit ovalem Querschnitt ist bezüglich der Längsachse Z auf der Position des Drucksensors 3 angeordnet und umfliesst den, bezüglich der Längsachse Z, vorderen drucksensitiven Teil 32 des Drucksensors 3. Es ist zu beachten, dass eine solche Aufteilung des Hohlraumes 6 in zwei weitgehend rotationssymmetrische Kanäle keineswegs notwendig ist. Es ist auch keine Aufteilung des Kanals, eine Aufteilung in zwei Kanäle oder auch eine Aufteilung in oder mehr als zwei Kanäle denkbar. Auch kann der Fachmann einen oder mehrere nicht weitgehend rotationssymmetrische Kanäle vorsehen. Diese Möglichkeiten sind ebenfalls Teil der vorliegenden Erfindung.

Es können auch mehrere Zuleitungen 4 oder Ableitungen 5 denkbar sein.

Erfindungsgemäss ist der Adapter 2 der Ausführungsform aus Fig. 1 bis Fig. 3 einstückig ausgeführt. Die Rohrstücke 17 sind demnach nicht Teil des Adapters 2 in dieser Ausführungsform. Es ist allerdings problemlos möglich, auch die Rohrstücke 17 mit dem Adapter 2 einstückig auszuführen.

Fig. 4 und Fig. 5 zeigen eine perspektivische Darstellung des Adapters 2 aus den Fig. 1 bis 3. Der Adapter 2 ist aus Gründen der Übersichtlichkeit ohne Rohrstücke 17, ohne Fasen, ohne Aussensechskant und ohne Drucksensor 3 dargestellt. Der im Inneren des Adapters 2 angeordnete Hohlraum 6 ist strichliert dargestellt. Die Öffnungen für Zuleitung 4 und Ableitung 5 sind am zweiten Ende 72 angeordnet. Der Hohlraum 6 ist in dieser Ausführungsform des Adapters 2 hauptsächlich als zwei torusähnliche, die Ausnehmung 7 umlaufende, Kanäle ausgeführt, welche jeweils an gegenüberliegenden Seiten bezügliche der ersten Querachse X mit Zulauf 4 und Ablauf 5 verbunden sind.

In den im Folgenden beschriebenen weiteren Ausführungsformen sind Elemente mit gleichen Funktionen wie in der bereits beschriebenen Ausführungsform der Fig. 1 bis 5 mit den jeweils gleichen Bezugszeichen bezeichnet.

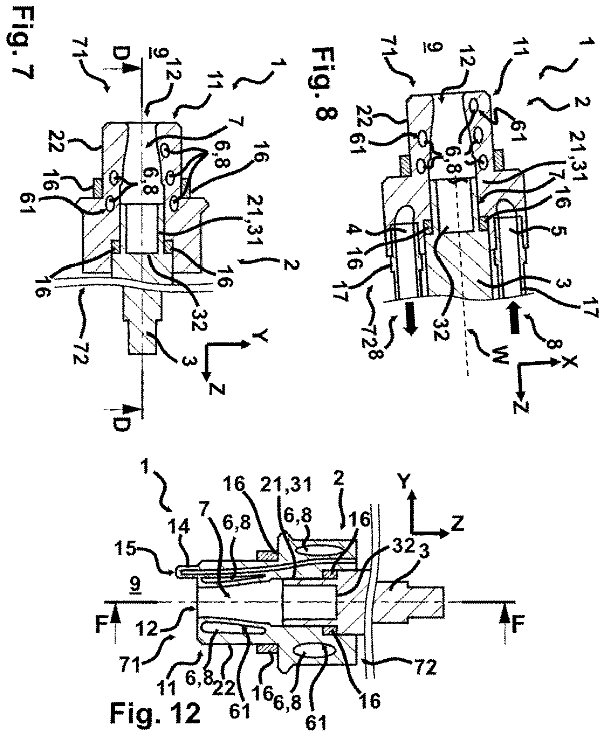

Fig. 6 zeigt eine weitere Ausführungsform eines Adapters 2 mit einem im Adapter 2 angeordneten Drucksensor 3. Fig. 7 zeigt einen Ausschnitt einer schematischen Schnittansicht CC entlang der zweiten Querachse Y und der Längsachse Z der Ansicht aus Fig. 6. Der Adapter 2 ist bis auf die Ausgestaltung des Hohlraums 6 identisch mit der Ausführungsform der Adapters 2 der Fig. 1 bis 3. Der Hohlraum 6 weist die Form eines röhrenförmigen Kanals auf, welcher sich entlang zweier Schraubenlinien vom ersten Ende 71 des Adapters 2 zum zweiten Ende 72 des Adapters 2 der zweiten Seite 72 erstreckt. Der Kanal beginnt an der Zuleitung 4, welche in Fig. 8 dargestellt ist, und erstreckt sich schraubenförmig zur zweiten Seite 72. Vor der zweiten Seite 72 erstreckt sich der Kanal wieder schraubenförmig zum ersten Ende 71 und ist dort mit der Ableitung 5 verbunden. Der Hohlraum 6 ist durch den doppelt schraubenförmigen Kanal ausgeführt. Der Hohlraum 6 umschliesst in einer Projektion des Hohlraums 6 auf die Ebene XY senkrecht zur Längsachse Z, die Längsachse Z und damit die Ausnehmung 7 zu 360°. Die Ausnehmung 7 ist durch den Hohlraum 6 vom Temperiermedium 8 umströmbar. Ein solcher Hohlraum 6 ist vorteilhaft mittels der bereits beschriebenen 3D Druckverfahren ausgeführt. Eine konventionelle Fertigung mit zerspanenden Methoden ist nahezu ausgeschlossen. Fig. 9 und Fig. 10 zeigen eine perspektivische Darstellung des Adapters 2 aus den Fig. 6 bis 8. Der Adapter 2 ist aus Gründen der Übersichtlichkeit ohne Rohrstücke 17, ohne Fasen, ohne Aussensechskant und ohne Drucksensor 3 dargestellt. Der im Inneren des Adapters 2 angeordnete Hohlraum 6 ist gestrichelt dargestellt. Die Öffnungen für Zuleitung 4 und Ableitung 5 sind am zweiten Ende 72 angeordnet. Die mögliche Formgebung des Hohlraums 6 ist in dieser Darstellung als zwei schraubenförmige bzw. spiralförmige Kanäle erkennbar.

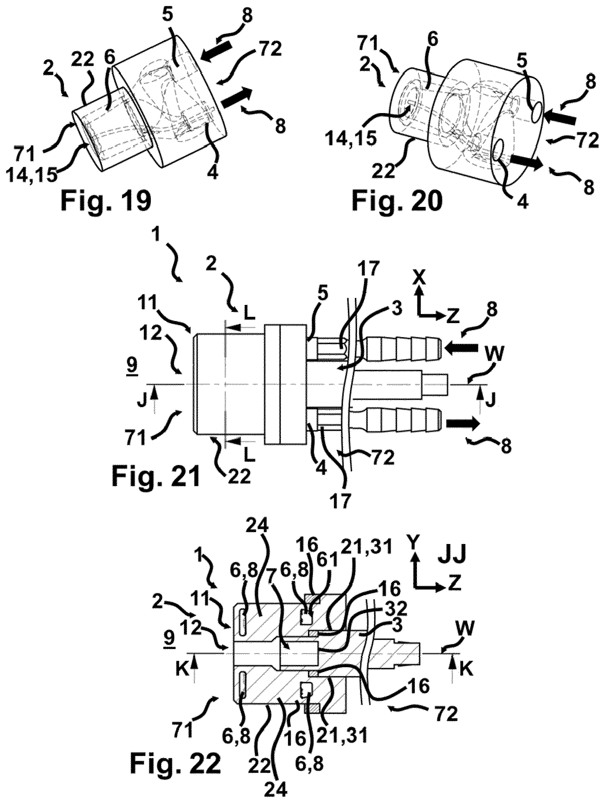

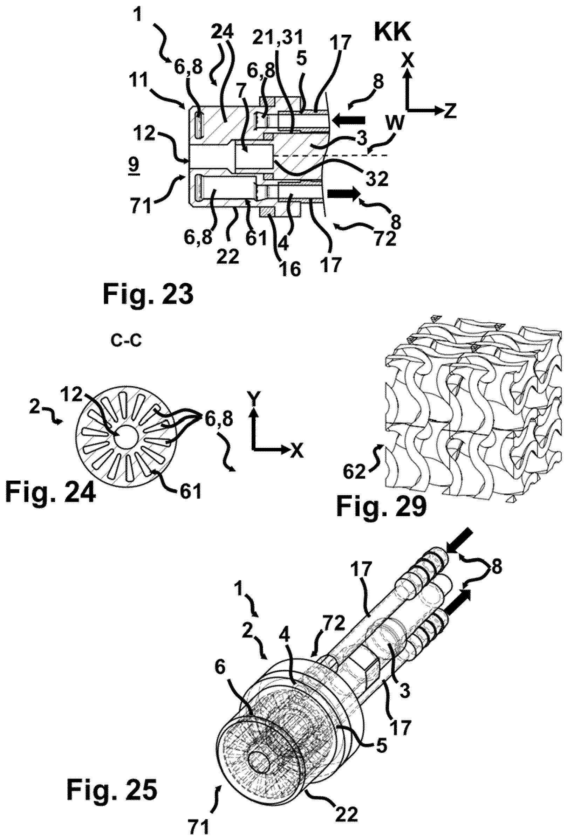

Fig. 21 zeigt eine weitere Ausführungsform eines Adapters 2 mit einem im Adapter 2 angeordneten Drucksensor 3. Fig. 22 zeigt einen Ausschnitt einer schematischen Schnittansicht JJ entlang der zweiten Querachse Y und der Längsachse Z der Ansicht aus Fig. 21. Der in Fig. 22 links nahe des ersten Endes 71 dargestellte Teil des Hohlraums 6 weist die Form eines Hohlzylinders auf. Der in Fig. 22 rechte untere Teil des Hohlraums 6 weist die Form eines sich weniger als 180° um die Längsachse Z erstreckenden Teil-Hohlzylinders auf, welcher mit der Ableitung 5 verbunden ist. Der in Fig. 22 rechte obere Teil des Hohlraums 6 weist die Form eines sich weniger als 180° um die Längsachse Z erstreckenden Teil-Hohlzylinders auf, welcher mit der Zuleitung 4 verbunden ist. In Fig. 23 ist in dem Schnitt KK entlang der ersten Querachse X und der Längsachse Z eine Verbindung zwischen linkem Hohlzylinder und rechten halben Hohlzylinder der Zuleitung 4 dargestellt. Der Bereich zwischen linkem Hohlzylinder und den beiden rechten Teil-Hohlzylindern ist ebenfalls weitgehend hohlzylinderförmig ausgestaltet, wobei mehrere Stabilitätselemente 24 die innere Wand des Hohlzylinders mit dem äusseren Rand des Hohlzylinders verbinden und den Hohlzylinder in einzelne Kammern unterteilen, wie in Fig. 24 dargestellt. Die Hälfte der Kammern ist dabei am zweiten Ende 72 mit dem Zulauf 4 verbunden, die andere Hälfte der Kammern ist am zweiten Ende 72 mit dem Ablauf 5 verbunden. Das Temperiermedium 8 strömt daher in den mit dem Zulauf 4 verbundenen Kammern vom zweiten Ende 72 zum ersten Ende 71 und in den mit dem Ablauf 5 verbundenen Kammern vom ersten Ende 71 zum zweiten Ende 72. Der Hohlraum 6 umschliesst die Ausnehmung 7 in einer Projektion des Hohlraums 6 auf die Ebene XY senkrecht zur Längsachse Z. Ein solcher Adapter 2 ist ähnlich stabil wie der in Fig. 1 bis 3 gezeigte Adapter 2, weist aber eine erheblich grössere Hohlraumwandung 61 auf, an der ein Wärmetausch zwischen Temperiermedium 8 und Adapter 2 möglich ist. Fig. 25 zeigt eine perspektivische Darstellung des Adapters 2 aus den Fig. 21 bis 24. Der im Inneren des Adapters 2 angeordnete Hohlraum 6 ist strichliert dargestellt. Die Öffnungen für Zuleitung 4 und Ableitung 5 sind am zweiten Ende 72 angeordnet.

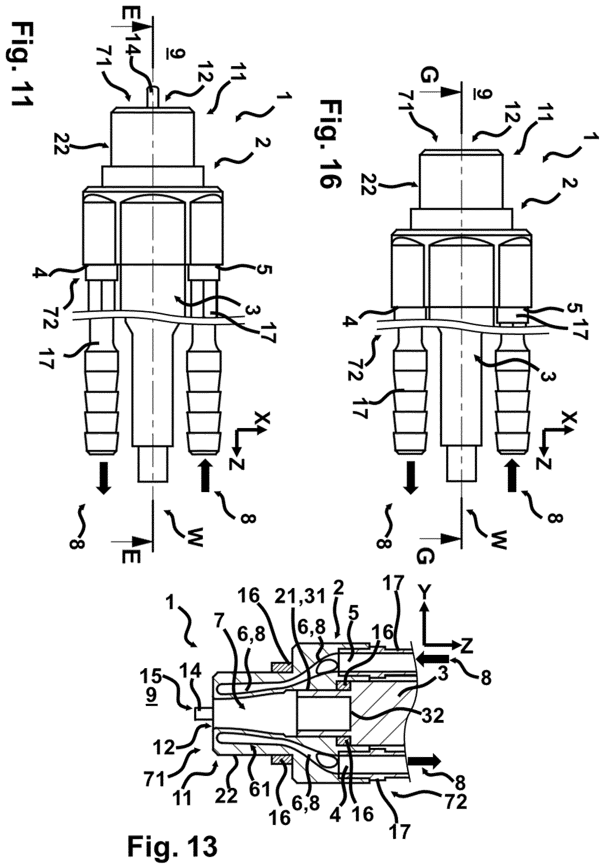

Fig. 11 zeigt eine weitere Ausführungsform eines Adapters 2 mit einem im Adapter 2 angeordneten Drucksensor 3. Der Adapter 2 weist zusätzlich eine Hülse 14 auf. Die Hülse 14 ist am ersten Ende 71 des Adapters 2 als hohle Ausstülpung ausgeführt, wie im Ausschnitt einer schematischen Schnittansicht EE entlang der zweiten Querachse Y und der Längsachse Z der Ansicht aus Fig. 11 dargestellt. Die hohle Hülse 14 erstreckt sich zum zweiten Ende 72 des Adapters 2, wo sie in einer Öffnung 23, genauer Kontaktöffnung 23, endet. Die Hülse 14 ist eingerichtet einen Temperaturmessfühler 15 aufzunehmen. Der Temperaturmessfühler 15 ist der Übersichtlichkeit halber nicht dargestellt. Der Temperaturmessfühler 15 ist vorteilhafterweise nahe des ersten Endes 71 des Adapters 2 angeordnet. Eine elektrische Kontaktierung durch die Kontaktöffnung 23 am zweiten Ende 72 des Adapters 2 ist einfach umsetzbar.

Die Hülse 14 ist zumindest teilweise im Druckanschluss 11 angeordnet. Bei Verwendung des Adapters 2 ragt die Hülse 14 zumindest teilweise in das Messmedium 9 und ist zum Messmedium 9 hermetisch bzw. druckdicht verschlossen. Das hat den Vorteil, dass der Bereich der Hülse 14, welcher nahe dem ersten Ende 71 des Adapters 2 ins Messmedium 9 ragt und zur Aufnahme des Temperaturmessfühlers 15 vorgesehen ist, zumindest teilweise vom Druckanschluss 11 thermisch entkoppelt ist. So kann die Temperatur des Messmediums 9 bestimmt werden und der Einfluss der Temperatur des Temperiermediums 8 auf den Temperaturmessfühler 15 zumindest verringert werden.

Eine Hülse 14 kann einen Einfluss auf die Geometrie des Hohlraums 6 haben, wie in Fig. 12 dargestellt. Der Hohlraum 6 ist in dieser Schnittansicht EE an der Stelle der Hülse 14 geringfügig verengt. Eine solche Anpassung der Geometrie ist vorteilhafterweise einfach mittels 3D Druck ausführbar. In der weiteren Schnittansicht FF entlang der Längsachse Z und der ersten Querachse X ist dargestellt, dass der Hohlraum 6 in dieser Ebene weitgehend dem Hohlraum 6 der Ausführungsform der Fig. 3 gleicht.

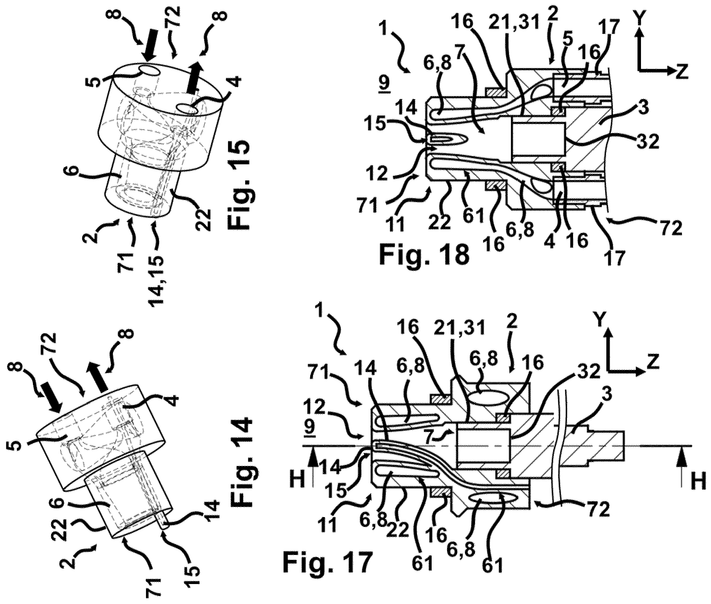

Fig. 14 und Fig. 15 zeigen eine perspektivische Darstellung des Adapters 2 aus den Fig. 11 bis 13. Der Adapter 2 ist aus Gründen der Übersichtlichkeit ohne Rohrstücke 17, ohne Fasen, ohne Aussensechskant und ohne Drucksensor 3 dargestellt. Der im Inneren des Adapters 2 angeordnete Hohlraum 6 ist gestrichelt dargestellt. Die innen hohle Hülse 14 ist teilweise gestrichelt dargestellt. Die Kontaktöffnung 23 ist in Fig. 15 dargestellt. Die Öffnungen für Zuleitung 4 und Ableitung 5 sind am zweiten Ende 72 angeordnet. Der Hohlraum 6 ist in dieser Ausführungsform des Adapters 2 hauptsächlich als zwei torusähnliche, die Ausnehmung 7 umlaufende Kanäle ausgeführt, welche jeweils an gegenüberliegenden Seiten bezügliche der ersten Querachse X mit Zulauf 4 und Ablauf 5 verbunden sind.

Fig. 16 zeigt eine weitere Ausführungsform eines Adapters 2 mit einem im Adapter 2 angeordneten Drucksensor 3. Der Adapter 2 weist zusätzlich eine Hülse 14 im Zuführkanal 12 des Druckanschluss 11 auf, wie in Fig. 17 im Ausschnitt einer schematischen Schnittansicht GG entlang der zweiten Querachse Y und der Längsachse Z der Ansicht aus Fig. 16 dargestellt. Die Hülse 14 ist am ersten Ende 71 des Adapters 2 als hohle Ausstülpung ausgeführt. Die hohle Hülse 14 erstreckt sich vom ersten Ende 71 innerhalb des Zuführkanals 12 durch eine innere Wandung des Zuführkanals 12 zum zweiten Ende 72 des Adapters 2, wo sie in einer Kontaktöffnung 23 endet. Die Hülse 14 ist eingerichtet, einen Temperaturmessfühler 15 aufzunehmen. Der Temperaturmessfühler 15 ist der Übersichtlichkeit halber nicht dargestellt. Der Temperaturmessfühler 15 ist vorteilhafterweise nahe des ersten Endes 71 des Adapters 2 angeordnet. Eine elektrische Kontaktierung durch die Kontaktöffnung 23 am zweiten Ende 72 des Adapters 2 ist einfach umsetzbar.

Die Hülse 14 ist zumindest teilweise im Druckanschluss 11 angeordnet. Bei Verwendung des Adapters 2 ragt die Hülse 14 zumindest teilweise in das Messmedium 9 und ist zum Messmedium 9 hermetisch bzw. druckdicht verschlossen. Das hat den Vorteil, dass der Bereich der Hülse 14, welcher nahe dem ersten Ende 71 des Adapters 2 ins Messmedium 9 ragt und zur Aufnahme des Temperaturmessfühlers 15 vorgesehen ist, zumindest teilweise vom Druckanschluss 11 thermisch entkoppelt ist. So kann die Temperatur des Messmediums 9 bestimmt werden und der Einfluss der Temperatur des Temperiermediums 8 auf den Temperaturmessfühler 15 zumindest verringert werden.

Vorteilhafterweise ist in allen beschriebenen Ausführungsformen des Adapters 2 mit Hülse 14 die Hülse 14 einstückig mit dem Adapter 2 ausgeführt. Dies ist vorteilhaft, da die Hülse 14 intrinsisch dicht mit dem Adapter 2 ausgeführt ist. Die bereits beschriebenen Nachteile von Schweissnähten werden so vermieden.

Wie in der Ausführungsform nach Fig. 16 bis 18 dargestellt, kann bei Herstellung mittels komplexer Strukturen die Hülse 14 derart im Adapter 2 geführt sein, dass sie keinen Einfluss auf die Geometrie des Hohlraums 6 hat. Der Hohlraum 6 der Ausführungsform aus Fig. 16 bis 18 ist identisch mit dem Hohlraum 6 der Ausführungsform aus Fig. 1 bis 3 ausgeführt.

Fig. 19 und Fig. 20 zeigen eine perspektivische Darstellung des Adapters 2 aus den Fig. 16 bis 18a. Der Adapter 2 ist aus Gründen der Übersichtlichkeit ohne Rohrstücke 17, ohne Fasen, ohne Aussensechskant und ohne Drucksensor 3 dargestellt. Der im Inneren des Adapters 2 angeordnete Hohlraum 6 ist gestrichelt dargestellt. Die innen hohle Hülse 14 ist teilweise gestrichelt dargestellt. Die Kontaktöffnung 23 ist in Fig. 20 dargestellt. Die Öffnungen für Zuleitung 4 und Ableitung 5 sind am zweiten Ende 72 angeordnet. Der Hohlraum 6 ist in dieser Ausführungsform des Adapters 2 hauptsächlich als zwei torusähnliche, die Ausnehmung 7 umlaufende Kanäle ausgeführt, welche jeweils an gegenüberliegenden Seiten bezüglich der ersten Querachse X mit Zulauf 4 und Ablauf 5 verbunden sind.

Alle Ausführungsformen eines temperierten Drucksensors 1 aufweisend einen Adapter 2 können ein oder mehrere weitere vorteilhafte Merkmale aufweisen. Dies betrifft nicht nur dargestellte Ausführungsformen der Figuren.

Vorteilhafterweise ist der Adapter 2 schweissfrei und lötfrei ausgeführt. Wie in den Fig. 1 bis 25 dargestellt, weist der Adapter 2 selbst keinerlei Schweissverbindungen oder Lötverbindungen auf. Eine eventuelle formschlüssige oder kraftschlüssige oder stoffschlüssige Verbindung von Rohrstücken 17 mit dem Adapter 2 im Bereich der Zuleitung 4 und/oder der Ableitung 5 sprechen nicht gegen diese Eigenschaft des Adapters 2.

Vorteilhaft ist der Adapter 2 mit einem additiven Fertigungsverfahren hergestellt. Die in den Fig. 1 bis 25 dargestellten Ausführungsformen weisen komplexe Geometrien des Hohlraums 6 auf. Der Hohlraum 6 ist somit frei von einer Beschränkung durch Fertigungsmethoden geformt. So ist beispielsweise in den Ausführungsformen der Fig. 1 bis 3 und der Fig. 11 bis 20 der Hohlraum 6 in Form von zwei Kanälen ausgeführt, zwischen denen der Adapter 2 Vollmaterial aufweist. Diese komplexe Bauform erhöht die Stabilität des Adapters 2. Der in Fig. 6 bis 8 dargestellte Adapter 2 ist mit konventionellen zerspanenden Fertigungsmethoden nicht einstückig zu Fertigen. So können in einstückigen konventionellen Bauelementen nur Hohlräume 6 mit geraden Kanälen, also geraden Bohrungen, realisiert werden. Der durch additive Fertigungsverfahren ausgeführte Adapter 2 der Figuren 6 bis 8 weist je mehrere schraubenförmige bzw. geschwungene Kanäle als Hohlraum 6 auf. Und die Ausführungsformen der Adapter 2 aus Fig. 1 bis 3, und 11 bis 13 weisen einen Hohlraum 6 in Form mehrerer Teilkanäle auf, die sich aus Zulauf 4 oder Ablauf 5 aufspalten oder zu einem Kanal vereinigen.

Weiter ist der Adapter 2 vorteilhafterweise aus einem metallischen Werkstoff ausgeführt. Ein metallischer Werkstoff ist vorteilhaft, da metallische Werkstoffe im Allgemeinen eine gute Wärmeleitfähigkeit aufweisen. So kann Wärmeenergie gut zwischen Drucksensor 3 in der Ausnehmung 7 durch den Werkstoff des Adapters 2 und Temperiermedium 8 geleitet werden. Die Ausnehmung 7 des Adapters 2 ist daher möglichst passgenau ausgeführt, um einen guten Wärmeübertrag zu gewährleisten. Ein guter Wärmeübertrag zwischen Adapter 2 und Drucksensor 3 findet ebenfalls im Bereich der Verbindungsmittel 21,31 statt, wo Adapter 2 und Drucksensor 3 intrinsisch miteinander in Kontakt stehen. Im Bereich zwischen Adapter 2 und Drucksensor 3, welcher durch ein Dichtelement 16 vom direkten Kontakt zum Messmedium 9 abgedichtet ist, kann optional eine wärmeleitende Paste oder ähnliches angefügt sein.

Es sind jedoch auch Anwendungsgebiete denkbar, in denen der Adapter 2 aus einer Keramik oder einem Kunststoff ausgeführt ist. So ist beispielsweise bei der Verwendung eines temperierten Sensors 1 nahe hohen elektrischen Spannungen Sowohl Adapter 2 als auch Drucksensor 3 und Membran 32 des Drucksensors 3 aus einem Kunststoff ausgeführt, wie beispielsweise Thermoplaste oder Duroplaste. Geeignete additive Fertigungsverfahren sind dem Fachmann bekannt.

Vorteilhafterweise ist der Adapter 2 aus einem Werkstoff mit einer Wärmeleitfähigkeit grösser 30 W·(m·K)⁻¹ ausgeführt. Eine hohe Wärmeleitfähigkeit grösser 30 W·(m·K)⁻¹ ist vorteilhaft, da der wärmeleitend mit dem Drucksensor 3 verbundene Adapter 2 effektiv Wärmeenergie zugeführt oder entzogen wird. Beispiele für einen Werkstoff sind Reinmetalle wie Kupfer, Aluminium, Magnesium oder Metalllegierungen, beispielsweise eine Kupferlegierung, Bronze, etc., oder Graphit. Insbesondere Graphit, ist gut verfügbar, kostengünstig und weist eine hohe Wärmeleitfähigkeit auf.

Besonders vorteilhaft ist der Adapter 2 aus einem Werkstoff mit einem Schmelzpunkt oberhalb 600°C und mit einer Dichte kleiner 5 g cm⁻¹ ausgeführt ist. Der Schmelzpunkt oberhalb 600° C erlaubt die Verwendung im Zusammenhang mit heissen Gasen, wobei die Gase eine Temperatur oberhalb 600°C aufweisen können, da der Adapter 2 effektiv gekühlt werden kann. Die niedrige Dichte unterhalb 5 g cm⁻¹ ermöglicht einen leichten Adapter 2 zu bauen in Anwendungen, in denen Gewicht oder Massenträgheit eine grosse Rolle spielen, beispielsweise in der Raumfahrt in Verbindung mit Raketentriebwerken. Je nach angestrebter Temperaturbeständigkeit eignen sich beispielsweise für einen Werkstoff Aluminium, Magnesium, Titan, oder Graphit (bei Ausschluss von Sauerstoff).

Auch besonders vorteilhaft ist der Adapter 2 aus einem Werkstoff mit einer Dichte kleiner 5 g cm⁻¹ und einer Wärmeleitfähigkeit grösser 30 W·(m·K)⁻¹ ausgeführt. Dies verbindet den vorteilhaften Leichtbau mit einer effizienten Temperierung des Drucksensors 3.

Vorteilhafterweise ist der Adapter 2 aus einem metallischen Werkstoff ausgeführt. Ein metallischer Werkstoff ist vorteilhaft, da metallische Werkstoffe im Allgemeinen eine gute Wärmeleitfähigkeit aufweisen. So kann Wärmeenergie gut zwischen Drucksensor 3 in der Ausnehmung 7 durch den Werkstoff des Adapters 2 und Temperiermedium 8 geleitet werden. Für einen Adapter 2 aus einem metallischen Werkstoff sind oben genannte additive Fertigungsverfahren vorteilhaft.

Der Adapter 2 kann auch aus einem Werkstoff ausgeführt sein, der für einen Drucksensor 3 oder ein Sensorgehäuse bekannt ist, beispielsweise Reinmetalle wie Titan, Kupfer, Silber, Aluminium, usw. oder Metalllegierungen, wie Kupferlegierungen oder 17-4PH, oder 304 oder 316L, usw. Die Werkstoff 17-4PH oder 316L, dem Fachmann auch als Stahl 1.4548 bzw. 1404 nach DIN EN 10027 bekannt, ist besonders vorteilhaft, da oftmals Drucksensoren ein Gehäuse aus diesem Werkstoff aufweisen. In diesem Fall weist der Adapter 2 und der Drucksensor 3 eine gleiche Wärmeausdehnung bei Temperaturänderung auf, wodurch Spannungen zwischen Adapter 2 und Drucksensor 3 vermieden werden. Der Fachmann wählt, je nach Bedarf zugunsten der Korrosionsbeständigkeit und Wärmeleitfähigkeit und Kosten des Adapters 2, einen geeigneten Werkstoff.

So weisen Gold und Kupfer eine sehr hohe Wärmeleitfähigkeit grösser 200 W·(m·K)⁻¹ (Watt pro Meter und Kelvin) auf. Gold und Titan sind sehr korrosionsbeständig. Aluminium und Titan und Magnesium wiederum weisen eine niedrige Dichte kleiner 5 g cm⁻¹ (Gramm pro Kubikzentimeter) auf. Somit können relativ leichte Adapter 2 realisiert werden.

Besonders vorteilhaft ist der Adapter 2 dichtungsfrei ausgeführt. Der Hohlraum 6 ist dabei nicht durch ein Dichtelement zum Messmedium 9 oder zu einer Umgebung abgedichtet, ausgenommen der Verbindung von Zulauf 4 mit einem Rohrstück 17 und Ablauf 5 mit einem Rohrstück 17. Dies ist vorteilhaft, da keine weiteren Dichtungen nötig sind und so ein Ausfall einer Dichtung und eine eventuelle Leckage vermieden wird.

Besonders vorteilhaft ist der Adapter 2 mit einem der oben genannten Metall-3D-Druckverfahren hergestellt. So sind komplexe Geometrien des Adapters 2 und des Hohlraums 6 ohne Weiteres aus einem metallischen Werkstoff realisierbar.

Bevorzugt weist eine Wandung 61 des Hohlraums 6, kurz Hohlraumwandung 61, zumindest teilweise eine Oberflächenrauhigkeit R_{z} grösser 10 µm auf. Besonders bevorzugt weist die Hohlraumwandung 61 zumindest teilweise eine Oberflächenrauhigkeit R_{z} nach DIN EN ISO 4288 zwischen R₂ = 20 µm und R_{z} = 1000 µm auf. Diese Mikrostrukturierung der Hohlraumwandung 61 ist vorteilhaft, da es durch die Rauigkeit der Hohlraumwandung 61 zu einer Verwirbelung des den Hohlraum 6 durchströmenden Temperiermediums 8 kommt. Die Verwirbelung bewirkt eine Durchmischung des Temperiermediums 8, welches in Folge dessen eine höhere Wärmeenergie dem Adapter 2 abführt oder zuführt. Es hat sich gezeigt, dass die Wärmeübertragung bei einer Oberflächenrauheit R_{z} nach DIN EN ISO 4288 zwischen R₂ = 20 µm und R_{z} = 1000 µm der Hohlraumwandung 61 gegenüber konventionell gefertigten Adaptern mit einer Oberflächenrauheit R₂ < 2 µm um mehr als 20% höher ist. Eine solche Oberflächenrauheit kann direkt durch 3D-Druckverfahren oder durch chemisches Ätzen erlangt werden.

Vorteilhaft ist im Hohlraum 6 zumindest teilweise eine dreidimensionale Struktur 62 angeordnet, beispielsweise ein poröses, schwammartiges Material. Die dreidimensionale Struktur 62 ist durch das Temperiermedium 8 durchströmbar. Die Struktur 62 bewirkt dabei eine weitere Verwirbelung des Temperiermediums 8 und dadurch eine bessere Durchmischung desselben. Der Übertrag von Wärmeenergie zwischen Temperiermedium 8 und Hohlraumwandung 61 ist dadurch weiter gesteigert.

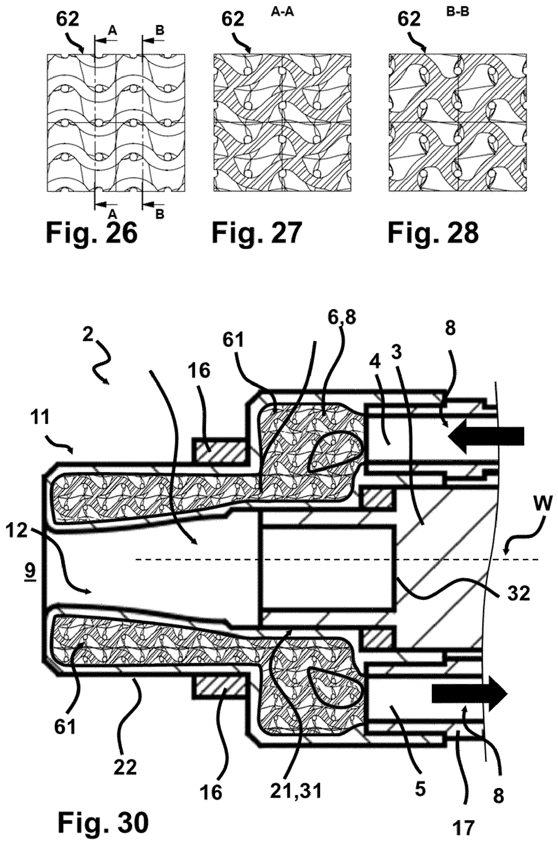

Besonders vorteilhaft ist die dreidimensionale Struktur 62 als dreifach periodische Minimalfläche, kurz TPMS (triply periodic minimal surfaces) ausgeführt, wie sie in den Fig. 26 bis 29 gezeigt sind. Eine TPMS Struktur 62 setzt sich aus dreidimensionalen Zellen in einer üblicherweise räumlich periodischen Anordnung zusammen. Eine mathematische Beschreibung und Möglichkeit zur Erzeugung für den 3D Druck notwendiger digitalen CAD Zeichnungen ist dem Fachmann bekannt, beispielsweise in Publikation Al-Ketan O, Abu Al-Rub RK. MSLattice: A free software for generating uniform and graded lattices based on triply periodic minimal surfaces. Mat Design Process Comm. 2020.

Die die TPMS Struktur 62 kann dabei aus einem Kunststoff oder einem metallischen Werkstoff oder Graphit ausgeführt sein. Im Hohlraum 6 ist zumindest teilweise die TPMS Struktur 62 angeordnet. Die Fig. 30 stellt eine Ausführungsform eines Adapters 2 mit im Hohlraum 6 angeordneter TPMS Struktur 62 exemplarisch dar. Natürlich ist die Anordnung einer TPMS Struktur 62 nicht auf die dargestellte Ausführungsform beschränkt.

Bevorzugt ist die TPMS Struktur 62 aus dem gleichen Werkstoff wie der Adapter 2 ausgeführt. So werden Spannungen zwischen Hohlraumwandung 61 und TPMS Struktur 62 vermieden. Der Übertrag von Wärmeenergie zwischen Temperiermedium 8 und Adapter 2 ist durch die im Hohlraum 6 angeordnete TPMS Struktur 62 weiter gesteigert. Insbesondere durch die Dimensionierung der einzelnen Zellen und Hohlräume 6 kann der Grad der Verwirbelung und der damit einhergehende Druckverlust zwischen Zulauf 4 und Ablauf 5 präzise eingestellt werden. Die Kühlleistung, Heizleistung oder Temperierleistung pro Bauraum des Adapters 2 ist damit einfach und effizient maximiert.

Vorteilhafterweise ist die Struktur 62 einstückig mit dem Adapter 2 ausgeführt. Dies ist insbesondere in Verbindung mit Metall-3D-Druckverfahren möglich. So kann die TPMS Struktur 62 direkt mit dem Adapter 2 erstellt werden. Dies ermöglicht eine optimale Wärmeübertragung zwischen TPMS Struktur 62 und Hohlraumwandung 61.

Insbesondere ist die Oberflächenrauheit zwischen R₂ = 20 µm und R_{z} = 1000 µm der Hohlraumwandung 61 auch für die Oberfläche der TPMS Struktur 62 vorteilhaft. So wird eine weitere Verwirbelung des Temperiermediums 8 sichergestellt.

Von den bekannten und in oben genannter Publikation beschriebenen TPMS Strukturen 62 Gyroid, Diamond, Primitive, I-WP, Neovius, S, F-RD, und PMY hat sich insbesondere die Struktur 62 Diamond (Schwarz-Diamond) mit seinen Untervarianten als besonders voreilhaft erwiesen, da sie eine hohe Oberfläche aufweist, wodurch ein Wärmeübertrag gut realisierbar ist, das Temperiermedium 8 gut vermischt und gleichzeitig weiterhin gut durchströmbar ist.

Besonders bevorzugt weist die Hohlraumwandung 61 keine Kanten mit einem Radius kleiner 0.1 mm auf. Dies hat den Vorteil, dass es nicht zu starken lokalen Verwirbelungen kommt. Eine Verwirbelung des Temperiermediums 8 ist so gleichmässig über den gesamten Strömungsweg gegeben.

In einigen Ausführungsformen weist der Adapter 2 einen Druckanschluss 11 zum Zuführen eines Messmediums 9 zur Ausnehmung 7 für den Drucksensor 3 auf. Der Druckanschluss 11 weist dazu mindestens einen Zuführkanal 12 auf. Der Druckanschluss 11 ist mit einer Messbohrung verbindbar. Üblicherweise ist der Druckanschluss 11 mit einem Verbindungsmittel 22 mit der Messbohrung verbunden, beispielsweise mit einem Aussengewinde. Vorteilhafterweise weist der Druckanschluss 11 einen Durchmesser kleiner 9 mm auf. Da insbesondere M8 und kleinere Gewindedurchmesser nach DIN 13 oder ¼ Zoll und kleinere Gewindedurchmesser nach Unified Thread Standard als Messbohrungen weit verbreitet sind, weist der Druckanschluss 11 besonders bevorzugt ein M8 Aussengewinde oder 1/4 Zoll Aussengewinde auf. Die Gewindeangabe bezieht sowohl Regelgewinde, Feingewinde und gegebenenfalls Extrafeingewinde mit ein. Dies hat den Vorteil, dass der Adapter 2 insbesondere in beengten Verhältnissen einsetzbar ist. Die Ausnehmung 7 ist dabei derart ausgeführt, dass sie beispielsweise ein M5 Innengewinde nach DIN 13 als Verbindungsmittel 21 aufweist. In der Ausnehmung 7 kann dann ein Drucksensor 3 mit einem M5 Aussengewinde als Verbindungsmittel 31 eingefügt werden, beispielsweise ein Kistler Typ 4017.

Der Adapter 2 wird bevorzugt mit einem Drucksensor 3 zur Temperierung desselben in einer Temperierzusammenstellung 1 verwendet. Die Temperierzusammenstellung 1 umfasst daher einen Adapter 2 zur Kühlung oder Heizung oder Temperierung eines Drucksensors 3 und einen Drucksensor 3, wobei der Drucksensor 3 entlang einer Drucksensorlängsachse W weitgehend rotationssymmetrisch ausgeführt ist. Der Drucksensor 3 weist an einem ersten Ende 71 entlang der Drucksensorlängsachse W eine drucksensitive Fläche 32, meist in Form einer Membran 32, auf. Der Drucksensor 3 ist die Ausnehmung 7 des Adapters 2 einbringbar, wobei die Drucksensorlängsachse W parallel zur Längsachse Z ausgerichtet ist. Drucksensor 3 und Adapter 2 sind druckdicht verbindbar.

Es sind explizit in dieser Schrift auch Ausführungsformen einbezogen, welche eine Kombination der Merkmale hierin beschriebener Ausführungsformen aufweisen.

### Bezugszeichenliste

- X: Erste Querachse
- Y: Zweite Querachse
- Z: Längsachse
- W: Drucksensorlängsachse
- 1: Temperierter Sensor, Temperierzusammenstellung
- 2: Adapter
- 3: Drucksensor, Sensor
- 4: Zuleitung
- 5: Ableitung
- 6: Hohlraum
- 7: Ausnehmung
- 8: Temperiermedium
- 9: Messmedium
- 11: Druckanschluss
- 12: Zuführkanal
- 13: Druckanschlusswandung/Kanalwandung
- 14: Hülse
- 15: Temperaturmessfühler
- 16: Dichtelement
- 17: Rohrstück
- 21: Verbindungsmittel
- 22: Verbindungsmittel
- 23: Kontaktöffnung
- 31: Verbindungsmittel
- 32: Drucksensitive Fläche / Membran
- 61: Hohlraumwandung
- 62: Dreidimensionale Struktur / TPMS
- 71: Erstes Ende
- 72: Zweites Ende
- W: Drucksensorlängsachse

## Patentansprüche

1. Adapter (2) zur Kühlung oder Heizung oder Temperierung eines Drucksensors (3), wobei der Adapter (2) mindestens eine Zuleitung (4) aufweist; wobei der Adapter (2) mindestens eine Ableitung (5) aufweist; wobei der Adapter (2) mindestens einen Hohlraum (6) aufweist; wobei die mindestens eine Zuleitung (4) und die mindestens eine Ableitung (5) mit dem mindestens einem Hohlraum (6) derart verbunden sind, dass ein fluides Temperiermedium (8) von der Zuleitung (4) durch den Hohlraum (6) zu der Ableitung (5) zirkulierbar ist; wobei der Adapter (2) eine entlang einer Längsachse (Z) ausgeführte Ausnehmung (7) zur Aufnahme des Drucksensors (3) aufweist; wobei die Ausnehmung (7) ein erstes Ende (71) aufweist; welches bei Verwendung einem Messmedium (9) zugewandt ist; und wobei die Ausnehmung (7) ein zweites Ende (72) aufweist, in welches zweite Ende (72) der Drucksensor (3) einfügbar ist; und wobei der Hohlraum (6) derart ausgeführt ist, dass die Ausnehmung (7) vom Temperiermedium (8) umströmbar ist; **dadurch gekennzeichnet, dass** der Adapter (2) einstückig ausgeführt ist.

2. Adapter (2) nach Anspruch 1, **dadurch gekennzeichnet, dass** der Adapter (2) schweissfrei und lötfrei ausgeführt ist.

3. Adapter (2) nach Anspruch 1, **dadurch gekennzeichnet, dass** der Adapter (2) mit einem additiven Fertigungsverfahren hergestellt ist.

4. Adapter (2) nach Anspruch 1, **dadurch gekennzeichnet, dass** der Adapter (2) aus einem metallischen Werkstoff ausgeführt ist.

5. Adapter (2) nach Anspruch 1, **dadurch gekennzeichnet, dass** der Adapter (2) dichtungsfrei ausgeführt ist.

6. Adapter (2) nach Anspruch 1, **dadurch gekennzeichnet, dass** der Adapter (2) mit einem Metall-3D-Druck Verfahren hergestellt ist.

7. Adapter (2) nach Anspruch 1, **dadurch gekennzeichnet, dass** eine Wandung (61) des Hohlraums (6), kurz Hohlraumwandung (61), zumindest teilweise eine Oberflächenrauheit Rz grösser 10 µm aufweist; oder dass bevorzugt die Hohlraumwandung (61) zumindest teilweise eine Oberflächenrauheit Rz zwischen 20 µm und Rz = 1000 µm aufweist.

8. Adapter (2) nach Anspruch 1, **dadurch gekennzeichnet, dass** im Hohlraum (6) zumindest teilweise eine dreidimensionale Struktur (62) angeordnet ist, beispielsweise ein poröses, schwammartiges Material; und dass die Struktur (62) durch das Temperiermedium (8) durchströmbar ist.

9. Adapter (2) nach Anspruch 8, **dadurch gekennzeichnet, dass** die dreidimensionale Struktur (62) als TPMS ausgeführt ist (triply periodic minimal surfaces); und dass die TPMS (10) aus einem Kunststoff oder einem metallischen Werkstoff ausgeführt sind.

10. Adapter (2) nach einem der Ansprüche 8 oder 9, **dadurch gekennzeichnet, dass** die Struktur (62) einstückig mit dem Adapter (2) ausgeführt ist.

11. Adapter (2) nach Anspruch 1, **dadurch gekennzeichnet, dass** die Hohlraumwandung (61) keine Kanten mit einem Radius kleiner 0.5 mm aufweist; dass der Hohlraum (6) zumindest teilweise die Form eines Hohlzylinders aufweist; wobei mehrere Stabilitätselemente (24) im Hohlzylinder angeordnet sind.

12. Adapter (2) nach Anspruch 1, **dadurch gekennzeichnet, dass** der Adapter (2) aus einem Werkstoff mit einer Wärmeleitfähigkeit grösser 30 W·(m·K)⁻¹ ausgeführt ist, beispielsweise einem Reinmetall wie Kupfer, Aluminium, Magnesium oder einer Metalllegierung, beispielsweise einer Kupferlegierung, etc., oder Graphit ausgeführt ist; oder dass der Adapter(2) aus einem Werkstoff mit einem Schmelzpunkt oberhalb 600°C und mit einer Dichte kleiner 5 g cm⁻¹ ausgeführt ist; oder dass der Adapter (2) aus einem Werkstoff mit einer Dichte kleiner 5 g cm⁻¹ und einer Wärmeleitfähigkeit grösser 30 W·(m·K)⁻¹ ausgeführt ist.

13. Adapter (2) nach Anspruch 1, **dadurch gekennzeichnet, dass** der Adapter (2) einen Druckanschluss (11) zum Zuführen eines Messmediums (9) zur Ausnehmung (7) für den Drucksensor (3) aufweist; wobei der Druckanschluss (11) einen Zuführkanal (12) aufweist; wobei der Druckanschluss (11) mit einer Messbohrung verbindbar ist; und wobei der Druckanschluss (11) einen Durchmesser von maximal 9 mm aufweist.

14. Adapter (2) nach Anspruch 1, **dadurch gekennzeichnet, dass** der Adapter (2) eine Hülse (14) aufweist; wobei die Hülse (14) einstückig mit dem Adapter (2) ausgeführt ist; wobei die Hülse (14) eingerichtet ist einen Temperaturmessfühler (15) aufzunehmen; und wobei die Hülse (14) bei Verwendung des Adapters (2) in das Messmedium (9) ragt und zum Messmedium (9) hermetisch verschlossen ist.

15. Kit-of-parts einer Temperierzusammenstellung (1), enthaltend
• einen Adapter (2) zur Kühlung oder Heizung oder Temperierung eines Drucksensors (3);
• einen Drucksensor (3);
wobei der Drucksensor (3) entlang einer Drucksensorlängsachse (W) weitgehend rotationssymmetrisch ausgeführt ist; wobei der Drucksensor (3) an einem ersten Ende (71) entlang der Drucksensorlängsachse (W) eine drucksensitive Fläche (32) aufweist; wobei der Drucksensor (3) in die Ausnehmung (7) des Adapters (2) einbringbar ist; und wobei die Drucksensorlängsachse (W) parallel zur Längsachse (Z) ausgerichtet ist; wobei Drucksensor (3) und Adapter (2) druckdicht verbindbar sind; **dadurch gekennzeichnet, dass** der Adapter (2) nach einem der vorgehenden Ansprüche ausgeführt ist.
